# EUROPEAN PATENT APPLICATION

(11) **EP 4 772 552 A1**
(43) Date of publication of application: **08.07.2026**
(21) Application number: 24859072.1
(22) Date of filing: 28.05.2024
(51) Int. Cl.: C08F 230/08

(54) **SILICONE-CONTAINING COPOLYMER, METHOD FOR PRODUCING SAME, CURABLE RESIN COMPOSITION, AND CURED PRODUCT**

(30) Priority: 31.08.2023 JP 2023140756
(71) Applicant: JNC Corporation, Chiyoda-ku Tokyo 100-8105 (JP)
(72) Inventor: KOSEKI, Yohei, Ichihara-shi, Chiba 290-8551 (JP); KONDO, Manabu, Ichihara-shi, Chiba 290-8551 (JP)
(74) Representative: Becker, Eberhard
(86) International application number: PCT/JP2024/019477
(87) International publication number: WO 2025/047023

(57) **Abstract**

The present invention provides: a silicone compound that is compatible with a polymerizable monomer; and a copolymer of said silicone compound and a polymerizable monomer. This silicone-containing copolymer is obtained through polymerization of a composition containing a polymerizable monomer and a compound represented by formula (1). In formula (1), n represents an integer of 0-300, R₁, R₂, R₃, R₄, R₅, R₆, R₇, and R₈ each independently represent hydrogen or alkyl having 1-30 carbon atoms, R₉ and R₁₀ each independently represent hydrogen or methyl, and X₁, X₂, X₃, and X₄ each independently represent alkylene having 1-20 carbon atoms.

## Description

### Technical Field

The present invention relates to a silicone-containing copolymer, a method for producing a silicone-containing copolymer, and a curable resin composition. More specifically, the present invention relates to a curable resin composition including a silicone compound and a polymerizable monomer, a silicone-containing copolymer obtained by polymerizing the composition, and a method for producing the same.

### Related Art

Silicone is a linear polymer having siloxane bonds as a main skeleton. Due to its characteristics of having physical properties such as heat resistance, cold resistance, light resistance, insulation properties, transparency, mold release properties, water repellency, oil repellency, and slip properties, silicone is used in a wide range of fields such as resist materials, paints, coating materials, ophthalmic devices, and 3D printers (see, for example, Patent Documents 1 to 5).

Silicone-containing copolymers used as these materials may be obtained by subjecting a composition including a silicone compound having a (meth)acryloyl group and other polymerizable monomers to radical polymerization by light irradiation or heat. In particular, polymerization by light irradiation is energy-saving and enables polymerization of only specific portions by partial light irradiation, making it industrially utilized.

However, since silicone is hydrophobic and difficult to be compatible with other polymerizable monomers, there has been a problem that the composition of the silicone compound and polymerizable monomers becomes cloudy, and the copolymer obtained by polymerizing the composition also becomes cloudy and brittle. Therefore, development of silicone compounds that are compatible with other polymerizable monomers is being conducted (see, for example, Patent Document 2).

### Citation List

### Patent Literature

Patent Document 1: International Publication No. WO 2009/075233
Patent Document 2: Japanese Patent Application Laid-Open Publication No. 2016-84446
Patent Document 3: Japanese Patent Application Laid-Open Publication No. 2016-779
Patent Document 4: Japanese Patent Application Publication No. 2018-500192
Patent Document 5: Chinese Patent Application Publication No. 113122125

### SUMMARY OF INVENTION

### Technical Problem

As described above, silicone compounds that are compatible with polymerizable monomers are sought as raw materials for silicone-containing copolymers. Therefore, the present inventors have conducted intensive studies with the aim of providing silicone compounds that are compatible with polymerizable monomers, and providing copolymers of such silicone compounds and polymerizable monomers.

### Solution to Problem

As a result of intensive studies to solve the above problems, the inventors found that the compound represented by formula (1) is compatible with other polymerizable monomers and a transparent copolymer may be obtained, and that the copolymer has excellent water repellency and oil repellency, antifouling properties, and scratch resistance, thereby completing the present invention.

The present invention includes the following configurations.
[1] A silicone-containing copolymer obtained by polymerization of a composition including a compound represented by formula (1) and a polymerizable monomer. 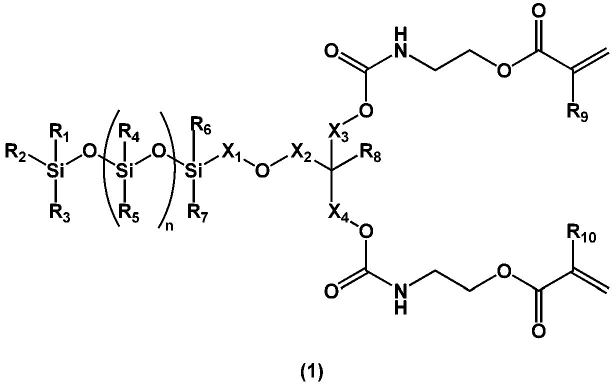 In formula (1), n is an integer of 0 to 300, R₁, R₂, R₃, R₄, R₅, R₆, R₇, and R₈ are each independently hydrogen or alkyl having 1 to 30 carbon atoms, R₉ and R₁₀ are each independently hydrogen or methyl, and X₁, X₂, X₃, and X₄ are each independently alkylene having 1 to 20 carbon atoms.
[2] The silicone-containing copolymer according to item [1], in which the compound represented by formula (1) is a compound represented by formula (2). 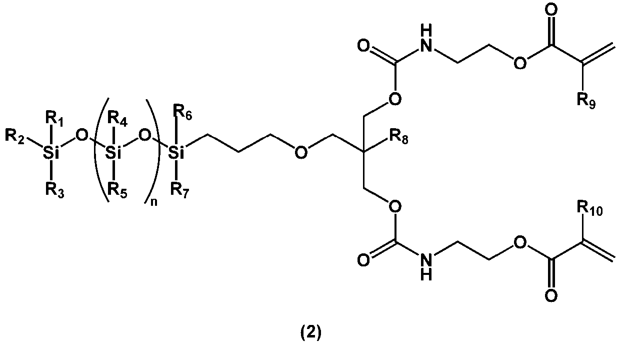 In formula (2), n is an integer of 0 to 300, R₁, R₂, R₃, R₄, R₅, R₆, R₇, and R₈ are each independently hydrogen or alkyl having 1 to 30 carbon atoms, and R₉ and R₁₀ are each independently hydrogen or methyl.
[3] The silicone-containing copolymer according to item [1] or [2], in which the compound represented by formula (1) or formula (2) is a compound represented by formula (3). 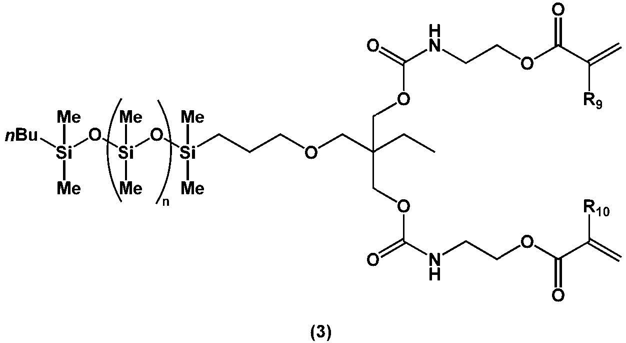 In formula (3), n is an integer of 0 to 300, and R₉ and R₁₀ are each independently hydrogen or methyl.
[4] The silicone-containing copolymer according to any one of items [1] to [3], in which the polymerizable monomer includes a polymerizable monomer having two or more (meth)acryloyl groups.
[5] The silicone-containing copolymer according to any one of items [1] to [3], in which the polymerizable monomer includes a polymerizable monomer having three or more (meth)acryloyl groups.
[6] The silicone-containing copolymer according to item [4], in which in a composition including the compound represented by formula (1) according to item [1] and a polymerizable monomer having two or more (meth)acryloyl groups, the content of the compound represented by formula (1) is 0.5% to 4.0% by weight relative to the total amount of the compound represented by formula (1) and the polymerizable monomer.
[7] The silicone-containing copolymer according to any one of items [1] to [3], in which the polymerizable monomer includes a polymerizable monomer having two or more acryloyl groups.
[8] The silicone-containing copolymer according to any one of items [1] to [3], in which the polymerizable monomer includes a polymerizable monomer having three or more acryloyl groups.
[9] The silicone-containing copolymer according to item [4] or [7], in which in a composition including the compound represented by formula (1) according to item [1] and a polymerizable monomer having two or more acryloyl groups, the content of the compound represented by formula (1) is 0.5% to 4.0% by weight relative to the total amount of the compound represented by formula (1) and the polymerizable monomer.
[10] The silicone-containing copolymer according to any one of items [1] to [3], in which the polymerizable monomer includes a polymerizable monomer having one (meth)acryloyl group.
[11] The silicone-containing copolymer according to item [10], in which in a composition including the compound represented by formula (1) according to item [1] and a polymerizable monomer having one (meth)acryloyl group, the content of the compound represented by formula (1) is 0.5% to 9.0% by weight relative to the total amount of the compound represented by formula (1) and the polymerizable monomer.
[12] The silicone-containing copolymer according to item [10], in which in a composition including the compound represented by formula (1) according to item [1] and a polymerizable monomer having one methacryloyl group, the content of the compound represented by formula (1) is 0.5% to 9.0% by weight relative to the total amount of the compound represented by formula (1) and the polymerizable monomer.
[13] The silicone-containing copolymer according to any one of items [1] to [12], in which the silicone-containing copolymer is obtained by ultraviolet irradiation.
[14] The silicone-containing copolymer according to any one of items [1] to [12], in which the silicone-containing copolymer is obtained by thermal polymerization.
[15] A cured product including the silicone-containing copolymer according to any one of items [1] to [14] and obtained by reacting the copolymer with a crosslinking agent.
[16] A method for producing the silicone-containing copolymer according to any one of items [1] to [14].
[17] A photocurable resin composition including a compound represented by formula (1) and a polymerizable monomer having two or more acryloyl groups, in which the content of the compound represented by formula (1) is 0.5% to 4.0% by weight relative to the total amount of the compound represented by formula (1) and the polymerizable monomer. 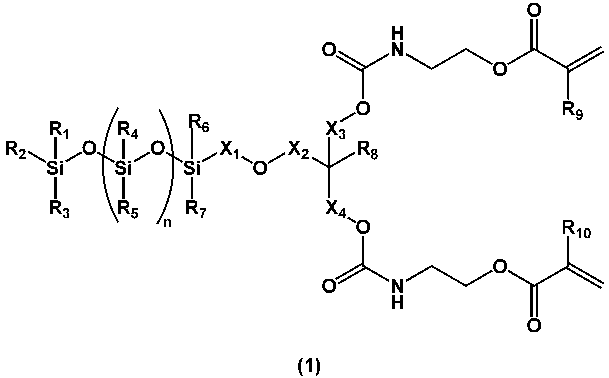 In formula (1), n is an integer of 0 to 300, R₁, R₂, R₃, R₄, R₅, R₆, R₇, and R₈ are each independently hydrogen or alkyl having 1 to 30 carbon atoms, R₉ and R₁₀ are each independently hydrogen or methyl, and X₁, X₂, X₃, and X₄ are each independently alkylene having 1 to 20 carbon atoms.
[18] A thermosetting resin composition including a compound represented by formula (1) and a polymerizable monomer having one methacryloyl group, in which the content of the compound represented by formula (1) is 0.5% to 9.0% by weight relative to the total amount of the compound represented by formula (1) and the polymerizable monomer. 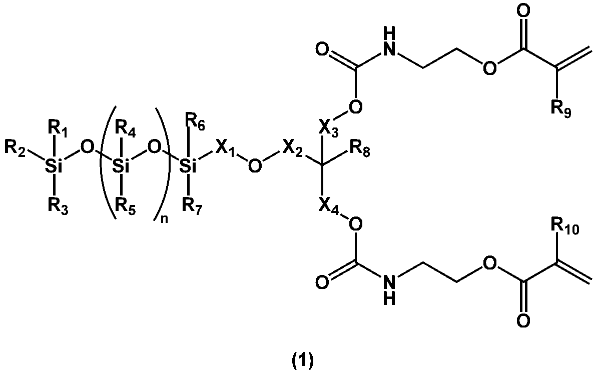 In formula (1), n is an integer of 0 to 300, R₁, R₂, R₃, R₄, R₅, R₆, R₇, and R₈ are each independently hydrogen or alkyl having 1 to 30 carbon atoms, R₉ and R₁₀ are each independently hydrogen or methyl, and X₁, X₂, X₃, and X₄ are each independently alkylene having 1 to 20 carbon atoms.

### Effects

The silicone compound that is a raw material of the silicone-containing copolymer of the present invention is compatible with other polymerizable monomers, and therefore can provide a transparent copolymer. Moreover, articles such as resist materials, paints, coating materials, ophthalmic devices, and 3D printers having this copolymer can be provided.

### DESCRIPTION OF the EMBODIMENTS

The present invention will be described in detail below. The description of the constituent requirements described below may be made based on representative embodiments and specific examples, but the present invention is not limited to such embodiments.

In the present invention, "the compound represented by formula (1)" may be referred to as "the compound of formula (1)". Moreover, in the present invention, a composition including the compound represented by formula (1) may be referred to as "raw material composition", and a copolymer obtained by polymerizing the raw material composition may be referred to as "the copolymer of the present invention" or "the polymer of the present invention". "(Meth)acrylate" means "either one or both of acrylate and methacrylate". "(Meth)acryloyl group" means "either one or both of acryloyl group and methacryloyl group".

### <Silicone-containing Copolymer>

The silicone-containing copolymer of the present invention is obtained by copolymerizing a raw material composition including a compound represented by formula (1) and a polymerizable monomer by light irradiation or heat.

### <Compound Represented by Formula (1)>

The compound represented by formula (1) is a silicone compound having a (meth)acryloyl group.

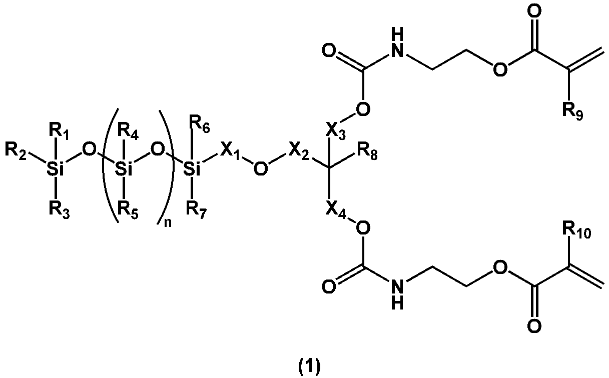

In formula (1), n is an integer of 0 to 300; R₁, R₂, R₃, R₄, R₅, R₆, R₇, and R₈ are each independently hydrogen or alkyl having 1 to 30 carbon atoms; R₉ and R₁₀ are each independently hydrogen or methyl; X₁, X₂, X₃, and X₄ are each independently alkylene having 1 to 20 carbon atoms.

Here, "alkyl having 1 to 30 carbon atoms" may be any of linear having 1 to 30 carbon atoms, branched having 3 to 30 carbon atoms, and cyclic having 3 to 30 carbon atoms, and "alkylene having 1 to 20 carbon atoms" may be any of linear having 1 to 20 carbon atoms and branched having 3 to 20 carbon atoms.

The number average molecular weight (Mn) of the compound represented by formula (1) is preferably smaller to prevent deterioration of compatibility with the polymerizable monomer, and is preferably larger to express the physical properties of silicone, therefore 500 to 20,000 is preferable, 500 to 15,000 is more preferable, and 500 to 10,000 is further preferable.

The molecular weight distribution (Mw/Mn) of the compound represented by formula (1) is preferably 1 to 2, more preferably 1 to 1.5, and further preferably 1 to 1.3 to express good silicone physical properties.

The number average molecular weight (Mn) and weight average molecular weight (Mw) may be measured by gel permeation chromatography (GPC). At that time, by using polystyrene as a standard sample and calculating the polystyrene equivalent molecular weight, the number average molecular weight (Mn) and weight average molecular weight (Mw) of the compound represented by formula (1) are obtained. The molecular weight distribution may be calculated by dividing the weight average molecular weight (Mw) by the number average molecular weight (Mn).

The compound represented by formula (1) may be compatible with polymerizable monomers. The reason for being compatible with polymerizable monomers is not necessarily clear, but it is considered as follows.

Generally, silicone is hydrophobic, so it is difficult to be compatible with polymerizable monomers. However, the compound represented by formula (1) has two urethane bonds in the molecule, and since urethane bonds exhibit strong hydrogen bonding, they show hydrophilicity. Therefore, the hydrophobicity of the entire molecule is mitigated, and it is considered that it may be compatible with polymerizable monomers.

Since the compound represented by formula (1) has two (meth)acryloyl groups, the compound represented by formula (1) may be easily crosslinked in the case of subjecting the raw material composition to polymerization reaction.

Examples of the compound represented by formula (1) include the compound represented by the following formula (2). 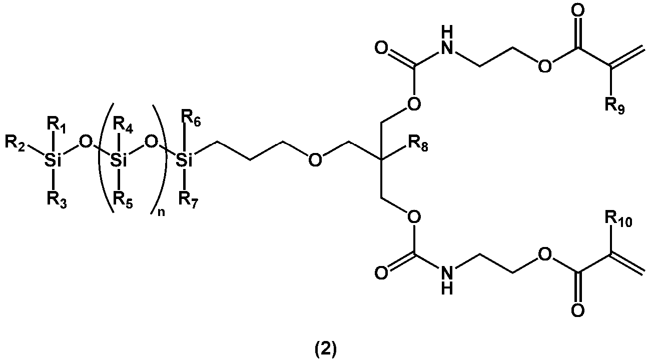 In formula (2), n is an integer of 0 to 300; R₁, R₂, R₃, R₄, R₅, R₆, R₇, and R₈ are each independently hydrogen or alkyl having 1 to 30 carbon atoms; R₉ and R₁₀ are each independently hydrogen or methyl.

Preferable examples of the compound represented by formula (2) include the compound represented by the following formula (3).

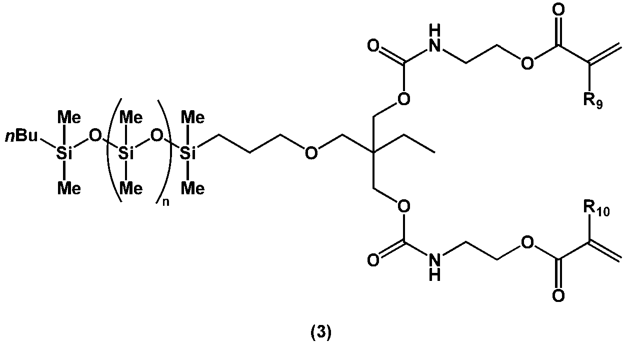

In formula (3), n is an integer of 0 to 300; R₉ and R₁₀ are each independently hydrogen or methyl.

For the production method of the compound represented by formula (3), reference may be made to Japanese Patent Application Laid-Open Publication No. 2017-8124.

In the composition including the compound represented by formula (1) and the polymerizable monomer for producing the copolymer of the present invention, the content of the compound represented by formula (1) requires a certain amount to express the physical properties of silicone, and the physical properties of the copolymer do not vary even in the case of containing a certain amount or more. In the case of obtaining the copolymer of the present invention by light irradiation, 0.01% to 40% by weight is preferable, 0.1% to 10% by weight is more preferable, and 0.5% to 4.0% by weight is further preferable, relative to the total amount of the compound represented by formula (1) and the polymerizable monomer. In the case of obtaining the copolymer of the present invention by thermal polymerization, 0.01% to 40% by weight is preferable, 0.1% to 10% by weight is more preferable, and 0.5% to 9.0% by weight is further preferable, relative to the total amount of the compound represented by formula (1) and the polymerizable monomer.

### <Polymerizable Monomer>

The compound represented by formula (1) has good compatibility with polymerizable monomers and may be suitably used as a raw material for silicone-containing copolymers. Other polymerizable monomers used as raw materials for silicone-containing copolymers may be selected without limitation from monomers having polymerizable groups. Examples of polymerizable groups include (meth)acryloyl groups, ethylenic double bonds, and maleimide. Polymerizable monomers having (meth)acryloyl groups may be classified as monofunctional (meth)acrylates for polymerizable monomers having one (meth)acryloyl group in the molecule, and multifunctional (meth)acrylates for polymerizable monomers having two or more (meth)acryloyl groups in the molecule. The polymerizable monomer may be one type or two or more types.

Examples of monofunctional (meth)acrylates are given below.

Examples of monofunctional (meth)acrylates include methyl (meth)acrylate, ethyl (meth)acrylate, propyl (meth)acrylate, butyl (meth)acrylate, pentyl (meth)acrylate, hexyl (meth)acrylate, octyl (meth)acrylate, decyl (meth)acrylate, tridecyl (meth)acrylate, lauryl (meth)acrylate, stearyl (meth)acrylate, isooctyl (meth)acrylate, isodecyl (meth)acrylate, ethoxydiethylene glycol acrylate, 2-(2-ethoxyethoxy)ethyl acrylate, methoxypolyethylene glycol acrylate, polyalkylene glycol acrylate, cyclohexyl (meth)acrylate, tetrahydrofurfuryl (meth)acrylate, alkoxylated tetrahydrofurfuryl acrylate, caprolactone addct tetrahydrofurfuryl (meth)acrylate, tetrahydrofurfuryl alcohol acrylic acid multimer ester, 2-phenoxyethyl acrylate, 3,3,5-trimethylcyclohexanol (meth)acrylate, isobornyl (meth)acrylate, benzyl (meth)acrylate, phenoxydiethylene glycol (meth)acrylate, phenoxypolyethylene glycol (meth)acrylate, 4-butylcyclohexyl (meth)acrylate, cyclopentyl (meth)acrylate, γ-butyrolactone (meth)acrylate, dicyclopentanyl (meth)acrylate, dicyclopentenyl (meth)acrylate, dicyclopentenyloxyethyl (meth)acrylate, 2-methyl-2-adamantyl (meth)acrylate, 2-ethyl-2-adamantyl (meth)acrylate, 3,5-dimethyl-7-hydroxyadamantyl (meth)acrylate, 3-hydroxy-1-adamantyl (meth)acrylate, methacryloyloxynorbornane (meth)acrylate, tetramethylpiperidinyl (meth)acrylate, pentamethylpiperidinyl (meth)acrylate, (meth)acrylate having an imide ring, cyclic trimethylolpropane formal (meth)acrylate, 2-hydroxyethyl (meth)acrylate, 2-hydroxypropyl (meth)acrylate, 4-hydroxybutyl (meth)acrylate, glycidyl (meth)acrylate, and 1,4-cyclohexanedimethanol mono(meth)acrylate.

Examples of multifunctional (meth)acrylates are given below.

Examples of multifunctional (meth)acrylates include ethylene glycol di(meth)acrylate, diethylene glycol di(meth)acrylate, polyethylene glycol di(meth)acrylate, propylene glycol di(meth)acrylate, butylene glycol di(meth)acrylate, hexanediol di(meth)acrylate, cyclohexanedimethanol di(meth)acrylate, 1,6-hexanediol di(meth)acrylate, 1,9-nonanediol di(meth)acrylate, polytetramethylene glycol diacrylate, neopentyl glycol diacrylate, tricyclodecane dimethanol diacrylate, bisphenol A alkylene oxide adduct di(meth)acrylate, bisphenol F alkylene oxide adduct di(meth)acrylate, trimethylolpropane tri(meth)acrylate, ditrimethylolpropane tetra(meth)acrylate, glycerin tri(meth)acrylate, pentaerythritol tri(meth)acrylate, pentaerythritol tetra(meth)acrylate, dipentaerythritol penta(meth)acrylate, dipentaerythritol hexa(meth)acrylate, ethylene oxide adduct trimethylolpropane tri(meth)acrylate, ethylene oxide adduct ditrimethylolpropane tetra(meth)acrylate, ethylene oxide adduct pentaerythritol tetra(meth)acrylate, ethylene oxide adduct dipentaerythritol hexa(meth)acrylate, propylene oxide adduct trimethylolpropane tri(meth)acrylate, propylene oxide adduct ditrimethylolpropane tetra(meth)acrylate, propylene oxide adduct pentaerythritol tetra(meth)acrylate, propylene oxide adduct dipentaerythritol hexa(meth)acrylate, ε-caprolactone adduct trimethylolpropane tri(meth)acrylate, ε-caprolactone adduct ditrimethylolpropane tetra(meth)acrylate, ε-caprolactone adduct pentaerythritol tetra(meth)acrylate, ε-caprolactone adduct dipentaerythritol hexa(meth)acrylate, ε-caprolactone adduct tris((meth)acryloxyethyl)isocyanurate, di((meth)acryloyloxyethyl)isocyanurate, tri((meth)acryloyloxyethyl)isocyanurate, alkylene oxide adduct tri(acryloyloxyethyl)isocyanurate, and alkylene oxide adduct tri(methacryloyloxyethyl)isocyanurate.

Urethane (meth)acrylates may also be mentioned as multifunctional acrylates. Urethane (meth)acrylates may be obtained by reacting multifunctional isocyanates with multifunctional hydroxy compounds, and then further reacting with hydroxyl group-containing (meth)acrylates and, optionally, hydroxyl group-containing allyl ether compounds.

### <Multifunctional Isocyanate>

The number of isocyanate groups (-N=C=O) in the multifunctional isocyanate is usually 2 or more, preferably 2 to 6. Examples of multifunctional isocyanates include 2,4-tolylene diisocyanate and its isomers, diphenylmethane diisocyanate, xylylene diisocyanate, naphthalene diisocyanate, triphenylmethane triisocyanate, hexamethylene diisocyanate, hydrogenated xylylene diisocyanate, isophorone diisocyanate, and dicyclohexylmethane diisocyanate. Commercial products include Burnock D-750 (manufactured by DIC Corporation), Crisvon NK (manufactured by DIC Corporation), Desmodur L (manufactured by Sumika Covestro Urethane Co., Ltd.), Coronate L (manufactured by Tosoh Corporation), Takenate D-102 (manufactured by Mitsui Chemicals, Inc.), and Isonate 143L (manufactured by Dow Chemical Japan Ltd.).

### <Multifunctional Hydroxy Compound>

The multifunctional hydroxy compound refers to, for example, a compound in which the number of hydroxy groups (-OH) is usually 2 or more, preferably 2 to 4. Examples of multifunctional hydroxy compounds include polyether polyols, polyester polyols, and polycarbonate polyols.

Examples of polyether polyols include glycerin-ethylene oxide adduct, glycerin-propylene oxide adduct, glycerin-tetrahydrofuran adduct, glycerin-ethylene oxide propylene oxide adduct, trimethylolpropane-ethylene oxide adduct, trimethylolpropane-propylene oxide adduct, trimethylolpropane-tetrahydrofuran adduct, trimethylolpropane-ethylene oxide propylene oxide adduct, dipentaerythritol-ethylene oxide adduct, dipentaerythritol-propylene oxide adduct, dipentaerythritol-tetrahydrofuran adduct, and dipentaerythritol-ethylene oxide propylene oxide adduct.

Examples of polyester polyols include polycondensates obtained by reacting polyhydric alcohols with polybasic acids under known conditions.

Examples of polyhydric alcohols include ethylene glycol, propylene glycol, diethylene glycol, dipropylene glycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, triethylene glycol, polyethylene glycol, polypropylene glycol, 1,2,3,4-tetrahydroxybutane, glycerin, trimethylolpropane, 1,2-cyclohexane glycol, 1,3-cyclohexane glycol, 1,4-cyclohexane glycol, p-xylene glycol, bicyclohexyl-4,4-diol, 2,6-decalin glycol, 2,7-decalin glycol, ethylene oxide adduct of bisphenol A, and propylene oxide adduct of bisphenol A.

Examples of polybasic acids include oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, other saturated aliphatic dicarboxylic acids (11 to 13 carbon atoms), for example, maleic acid, fumaric acid, itaconic acid, other unsaturated aliphatic dicarboxylic acids, for example, orthophthalic acid, isophthalic acid, terephthalic acid, toluenedicarboxylic acid, naphthalenedicarboxylic acid, other aromatic dicarboxylic acids, for example, hexahydrophthalic acid, other alicyclic dicarboxylic acids, for example, dimer acid, hydrogenated dimer acid, other carboxylic acids such as het acid, and acid anhydrides derived from these carboxylic acids, for example, oxalic anhydride, succinic anhydride, maleic anhydride, phthalic anhydride, 2-alkyl (12 to 18 carbon atoms) succinic anhydride, tetrahydrophthalic anhydride, trimellitic anhydride, and furthermore, acid halides derived from these carboxylic acids and the like, for example, oxalic acid dichloride, adipic acid dichloride, and sebacic acid dichloride.

Examples of polycarbonate polyols include ring-opening polymers of one or more types of ε-caprolactone, γ-butyrolactone, γ-valerolactone, and the like, and copolymers of dihydric alcohols such as 1,4-butanediol, 1,5-pentanediol, 3-methyl-1,5-pentanediol, and 1,6-hexanediol with ring-opening polymers.

Examples of the multifunctional hydroxy compound include ethylene glycol, diethylene glycol, triethylene glycol, polyethylene glycol, propylene glycol, dipropylene glycol, polypropylene glycol, 2-methyl-1,3-propanediol, 1,3-butanediol, adducts of bisphenol A with propylene oxide or ethylene oxide, 1,2,3,4-tetrahydroxybutane, glycerin, trimethylolpropane, 1,3-butanediol, 1,2-cyclohexane glycol, 1,3-cyclohexane glycol, 1,4-cyclohexane glycol, paraxylene glycol, bicyclohexyl-4,4-diol, 2,6-decalin glycol, and 2,7-decalin glycol.

### <Hydroxyl group-containing (meth)acrylate>

As the hydroxyl group-containing (meth)acrylate, for example, hydroxyl group-containing (meth)acrylic acid esters are preferable, and specific examples include 2-hydroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, di(meth)acrylate of tris(hydroxyethyl)isocyanuric acid, and pentaerythritol tri(meth)acrylate.

In the case of obtaining the copolymer of the present invention by light irradiation, the polymerizable monomer preferably includes a polymerizable monomer having two or more (meth)acryloyl groups from the viewpoint of curability, and more preferably includes a polymerizable monomer having three or more (meth)acryloyl groups. Moreover, from the viewpoint of curability, the polymerizable monomer preferably includes a polymerizable monomer having two or more acryloyl groups, and more preferably includes a polymerizable monomer having three or more acryloyl groups.

In the case of the polymerizable monomer including a polymerizable monomer having two or more (meth)acryloyl groups, in the composition including the compound represented by formula (1) and the polymerizable monomer for producing the copolymer of the present invention, the content of the polymerizable monomer having two or more (meth)acryloyl groups is preferably 60% to 99.9% by weight, more preferably 90% to 99.9% by weight, and even more preferably 96% to 99.9% by weight, relative to the total amount of the compound represented by formula (1) and the polymerizable monomer, from the viewpoint of curability.

In the case of obtaining the copolymer of the present invention by thermal polymerization, the polymerizable monomer preferably includes a polymerizable monomer having one (meth)acryloyl group from the viewpoint of ease of handling.

In the case of the polymerizable monomer including a polymerizable monomer having one (meth)acryloyl group, in the composition including the compound represented by formula (1) and the polymerizable monomer for producing the copolymer of the present invention, the content of the polymerizable monomer having one (meth)acryloyl group is preferably 50% to 99.9% by weight, more preferably 80% to 99.9% by weight, and even more preferably 91% to 99.9% by weight, relative to the total amount of the compound represented by formula (1) and the polymerizable monomer.

### <Polymerization initiator>

The silicone-containing copolymer of the present invention may contain a polymerization initiator in the raw material composition. The polymerization initiator is preferably a thermal polymerization initiator that generates radicals by heat, or a photopolymerization initiator that generates radicals by irradiation with ultraviolet light or visible light. The polymerization initiator may be one type or two or more types.

### <Thermal polymerization initiator>

The thermal polymerization initiator is not particularly limited as long as it is a compound capable of generating radicals by heat, but azo-based or peroxide-based thermal polymerization initiators are preferred.

Examples of azo-based thermal polymerization initiators include 1,1'-azobis(cyclohexane-1-carbonitrile), 2,2'-azobis(4-methoxy-2,4-dimethylvaleronitrile), 2,2'-azobis(2,4-dimethylvaleronitrile), 2,2'-azobis(isobutyronitrile), dimethyl 2,2'-azobis(2-methylpropionate), 2,2'-azobis(2-methylbutyronitrile), 2,2'-azobis[2-(2-imidazolin-2-yl)propane] dihydrochloride, 2,2'-azobis[2-(2-imidazolin-2-yl)propane] disulfate dihydrate, 2,2'-azobis[2-(2-imidazolin-2-yl)propane], 2,2'-azobis(2-methylpropionamidine) dihydrochloride, 2,2'-azobis[N-(2-carboxyethyl)-2-methylpropionamidine] n hydrate, 2,2'-azobis[2-methyl-N-(2-hydroxyethyl)propionamide], 2,2'-azobis[N-(2-propenyl)-2-methylpropionamide], 2,2'-azobis(N-butyl-2-methylpropionamide), dimethyl 2,2'-azobis(isobutyrate), 4,4'-azobis(4-cyanovaleric acid), and 1-[(1-cyano-1-methylethyl)azo]formamide.

Examples of peroxide-based thermal polymerization initiators include benzoyl peroxide, t-butyl hydroperoxide, 1-methyl-1-phenylethyl hydroperoxide, 1,1,3,3-tetramethylbutyl hydroperoxide, di-t-butyl peroxide, di-t-hexyl peroxide, didodecanoyl peroxide, 1,1,3,3-tetramethylbutyl 2-ethylhexaneperoxy acid, t-hexyl peroxy-2-ethylhexanoate, t-butyl peroxy-2-ethylhexanoate, t-hexyl peroxybenzoate, and t-butyl peroxybenzoate.

Among these, 2,2'-azobisisobutyronitrile and dimethyl 2,2'-azobis(2-methylpropionate) are preferred from the viewpoint of excellent curability.

### <Photopolymerization initiator>

The photopolymerization initiator is not particularly limited as long as it is a compound capable of generating radicals upon irradiation with ultraviolet light or visible light, but α-hydroxylalkylphenone-based photopolymerization initiators are preferred.

Examples of the photopolymerization initiator include benzophenone, 4,4'-bis(diethylamino)benzophenone, xanthone, thioxanthone, isopropylxanthone, 2,4-diethylthioxanthone, 2-ethylanthraquinone, acetophenone, 2-hydroxy-2-methylpropiophenone, 2-hydroxy-2-methyl-4'-isopropylpropiophenone, 1-hydroxycyclohexylphenylketone, isopropylbenzoin ether, isobutylbenzoin ether, 2,2-diethoxyacetophenone, 2,2-dimethoxy-2-phenylacetophenone, 2,2-dimethoxy-1,2-diphenylethan-1-one, camphorquinone, benzanthrone, 2-hydroxy-1-{4-[4-(2-hydroxy-2-methyl-propionyl)benzyl]phenyl}-2-methyl-propan-1-one, 1-[4-(2-hydroxyethoxy)-phenyl]-2-hydroxy-2-methyl-1-propan-1-one, 2-hydroxy-2-methyl-1-phenyl-propan-1-one, 2-methyl-1-[4-(methylthio)phenyl]-2-morpholino-1-propanone, 2-benzyl-2-dimethylamino-1-(4-morpholinophenyl)-1-butanone, 2-dimethylamino-2-(4-methylbenzyl)-1-(4-morpholinophenyl)-1-butanone, oxy-phenyl-acetic acid 2-(2-oxo-2-phenyl-acetoxy-ethoxy)-ethyl ester, oxy-phenyl-acetic acid 2-(2-hydroxy-ethoxy)-ethyl ester, a mixture of oxy-phenyl-acetic acid 2-(2-oxo-2-phenyl-acetoxy-ethoxy)-ethyl ester and oxy-phenyl-acetic acid 2-(2-hydroxy-ethoxy)-ethyl ester, phenylglyoxylic acid methyl ester, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzothiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, bis(η5-2,4-cyclopentadien-1-yl)-bis(2,6-difluoro-3-(1H-pyrrol-1-yl)-phenyl)titanium, bis(2,4,6-trimethylbenzoyl)phenylphosphine oxide, and 2,4,6-trimethylbenzoyldiphenylphosphine oxide.

Among these, 2-dimethylamino-2-(4-methylbenzyl)-1-(4-morpholinophenyl)-1-butanone, 2-hydroxy-1-{4-[4-(2-hydroxy-2-methyl-propionyl)benzyl]phenyl}-2-methylpropan-1-one, or 1-hydroxycyclohexylphenylketone are preferable from the viewpoint of excellent sensitivity to ultraviolet rays.

### <Solvent>

The silicone-containing copolymer of the present invention may contain a solvent in the raw material composition. By containing a solvent, the compound represented by formula (1) may have better compatibility with the raw material composition. Preferable solvents include methanol, ethanol, propanol, isopropanol, butanol, t-butyl alcohol, tetrahydrofuran, methyl ethyl ketone, methyl isobutyl ketone, acetonitrile, propionitrile, benzonitrile, ethyl acetate, isobutyl acetate, butyl acetate, butyl propionate, ethyl lactate, methyl oxyacetate, ethyl oxyacetate, butyl oxyacetate, methyl methoxyacetate, ethyl methoxyacetate, butyl methoxyacetate, methyl ethoxyacetate, ethyl ethoxyacetate, methyl 3-oxypropionate, ethyl 3-oxypropionate, methyl 3-methoxypropionate, ethyl 3-methoxypropionate, methyl 3-ethoxypropionate, ethyl 3-ethoxypropionate, methyl 2-hydroxyisobutyrate, methyl 2-oxypropionate, ethyl 2-oxypropionate, propyl 2-oxypropionate, methyl 2-methoxypropionate, ethyl 2-methoxypropionate, propyl 2-methoxypropionate, methyl 2-ethoxypropionate, ethyl 2-ethoxypropionate, methyl 2-oxy-2-methylpropionate, ethyl 2-oxy-2-methylpropionate, methyl 2-methoxy-2-methylpropionate, ethyl 2-ethoxy-2-methylpropionate, methyl pyruvate, ethyl pyruvate, propyl pyruvate, methyl acetoacetate, ethyl acetoacetate, methyl 2-oxobutanoate, ethyl 2-oxobutanoate, methyl 3-methoxyisobutyrate, dioxane, ethylene glycol, diethyl ether, diethylene glycol, propylene glycol, dipropylene glycol, propylene glycol monomethyl ether, propylene glycol monoethyl ether, propylene glycol monopropyl ether, propylene glycol monobutyl ether, propylene glycol monophenyl ether, ethylene glycol monoisopropyl ether, ethylene glycol monobutyl ether, ethylene glycol monophenyl ether, diethylene glycol monomethyl ether, diethylene glycol monoethyl ether, diethylene glycol monopropyl ether, diethylene glycol monobutyl ether, diethylene glycol monophenyl ether, dipropylene glycol monomethyl ether, dipropylene glycol monoethyl ether, dipropylene glycol monopropyl ether, dipropylene glycol monobutyl ether, dipropylene glycol monophenyl ether, glycerin, benzyl alcohol, cyclohexanol, 1,4-butanediol, triethylene glycol, tripropylene glycol, propylene glycol monomethyl ether acetate, propylene glycol monoethyl ether acetate, propylene glycol monopropyl ether acetate, dipropylene glycol monoethyl ether acetate, dipropylene glycol monobutyl ether acetate, ethylene glycol monobutyl ether acetate, cyclohexanone, cyclopentanone, diethylene glycol monomethyl ether acetate, diethylene glycol monoethyl ether acetate, diethylene glycol monobutyl ether acetate, diethylene glycol dimethyl ether, diethylene glycol diethyl ether, diethylene glycol ethyl methyl ether, tetraethylene glycol dimethyl ether, toluene, xylene, anisole, γ-butyrolactone, N,N-dimethylacetamide, N,N-dimethylformamide, N,N-diethylformamide, N-methyl-2-pyrrolidone, and dimethylimidazolidinone. The solvent may be one type or two or more types.

Among these, methyl ethyl ketone, methyl isobutyl ketone, ethyl acetate, isobutyl acetate, butyl acetate, methyl 3-methoxypropionate, propylene glycol monomethyl ether acetate, N,N-dimethylacetamide, N,N-dimethylformamide, and N,N-diethylformamide are preferable because they have high solubility in the raw material composition and may shorten the drying time.

### <Other Components>

The copolymer of the present invention may contain other components. The other components may be selected and used according to their respective purposes to improve various properties of articles containing the silicone-containing copolymer. Examples of the other components include silicone compounds other than the compound represented by formula (1), surfactants, fine particles, polymerization inhibitors, flame retardants, ultraviolet absorbers, light stabilizers, antioxidants, and pigments.

### <Method for Producing Silicone-Containing Copolymer>

Next, the silicone-containing copolymer of the present invention and the method for producing the same will be described. The silicone-containing copolymer of the present invention is obtained by polymerizing (curing) a raw material composition containing the compound represented by formula (1) and a polymerizable monomer.

The silicone-containing copolymer of the present invention may be obtained by a conventional method for producing a silicone-containing copolymer from a raw material composition. The silicone-containing copolymer may be obtained by applying the raw material composition to a substrate or pouring it into a mold, and polymerizing (curing) by ultraviolet irradiation or heat curing. Alternatively, the silicone-containing copolymer may also be obtained by applying a solution obtained by heating and polymerizing the raw material composition in advance to a substrate or pouring it into a mold, and then heat curing. The method for producing the silicone-containing copolymer of the present invention will be described below.

For the substrate or mold, those made of aluminum foil, glass, silicon nitride, acrylic, polycarbonate, polyimide, etc. are used. As methods for applying to the substrate, spinner method, printing method, dipping method, dropping method, inkjet method, etc. are generally known. These methods are similarly applicable in the present invention.

In the case of a raw material composition containing a solvent, drying treatment may be performed for the purpose of removing the solvent before ultraviolet irradiation or heat curing. For the drying treatment, methods such as drying treatment in an oven or infrared furnace, and drying treatment on a hot plate are generally known. The drying treatment is preferably carried out at a temperature within a range where evaporation of the solvent is possible, and more preferably carried out at a relatively low temperature compared to the temperature in heat curing. Although depending on the composition of the raw material composition, the drying temperature is usually 70 to 120°C, and the drying time is, for example, 5 to 15 minutes for an oven and 1 to 10 minutes for a hot plate.

The silicone-containing copolymer may be obtained by polymerizing the substrate or mold coated with the raw material composition through ultraviolet irradiation or heat curing. Heat curing may be performed after ultraviolet irradiation, ultraviolet irradiation may be performed after heat curing, or ultraviolet irradiation may be performed while heat curing.

For the light source of ultraviolet irradiation, ultra-high pressure mercury lamp, high pressure mercury lamp, low pressure mercury lamp, Deep UV lamp, halogen lamp, metal halide lamp, high power metal halide lamp, xenon lamp, mercury xenon lamp, excimer lamp, KrF excimer laser, fluorescent lamp, LED lamp, sodium lamp, microwave-excited electrodeless lamp, etc. may be used without limitation.

Heat curing may be performed under conditions necessary for removing trace amounts of residual solvent after drying treatment, or under conditions necessary for polymerization of the raw material composition. For heat curing, methods such as heat treatment in an oven or infrared furnace, and heat treatment on a hot plate are generally known. The heating temperature is preferably in the range of 70°C to 300°C, and more preferably in the range of 100°C to 250°C. The heating time is preferably 1 minute to 5 hours, and more preferably 10 minutes to 2 hours. The temperature rise for heat curing may also be performed gradually, for example, heat curing may be performed multiple times at different temperatures while raising the temperature stepwise, or heating may be performed by changing the temperature from low temperature to high temperature. Both heating methods may also be performed in combination.

In the case of heating and polymerizing the raw material composition in advance, a copolymer solution may be obtained by heating the raw material composition containing a solvent while stirring. The heating temperature is preferably in the range of 30°C to 300°C, and more preferably in the range of 50°C to 200°C. The heating time is preferably 1 minute to 100 hours, and more preferably 30 minutes to 50 hours. The silicone-containing copolymer may be obtained by applying the copolymer solution to a substrate or pouring it into a mold, and performing heat curing after drying treatment.

Other polymers may be added to the copolymer solution, and a copolymer solution containing two or more types of polymers may also be used.

The method for producing the silicone-containing copolymer of the present invention may further include other steps besides the aforementioned steps. Examples of other steps include surface modification.

The silicone-containing copolymer of the present invention may be used in articles such as resist material, paint, coating material, ophthalmic device, and 3D printer.

### EXAMPLES

Hereinafter, the present invention will be described by Examples. The compounds used in the Examples are as follows.

### <Compound represented by formula (1)>

Among the compounds represented by formula (1), silicone compounds X to Z were used in the Examples. The structural formula of silicone compound X is represented by formula (3-1), and the structural formulas of silicone compounds Y and Z are represented by formula (3-2).

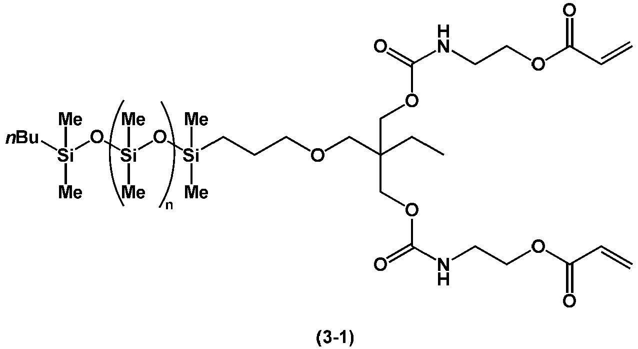

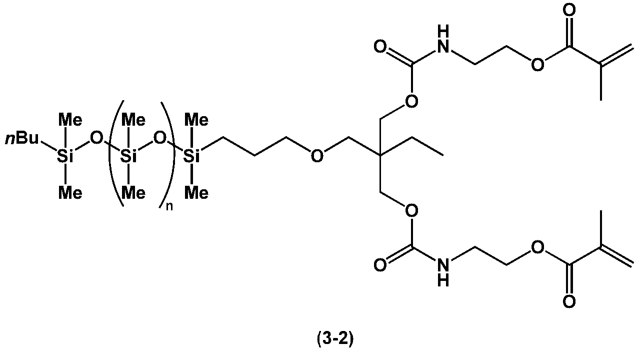

The molecular weight of the compound represented by formula (1) was measured by the following method, and the results are shown in Table 1.

The molecular weight was measured by gel permeation chromatography (GPC), and the ratio of weight average molecular weight (Mw) to number average molecular weight (Mn) was defined as molecular weight distribution (Mw/Mn). Polystyrene was used as a standard sample, and the polystyrene-equivalent molecular weight was measured. The polystyrene-equivalent molecular weight measurement by GPC was performed under the following measurement conditions.
a) Measurement equipment: HPLC LC-2000Plus series manufactured by JASCO Corporation
b) Column: Shodex KF-804L ×2 (in series)
c) Oven temperature: 40°C
d) Eluent: toluene 0.7 mL/min
e) Standard sample: polystyrene
f) Injection volume: 20 µL
g) Concentration: 0.05 g/10 mL
h) Sample preparation for molecular weight measurement: Using toluene as a solvent, the sample was dissolved by stirring at room temperature.

**[Table 1]**

| Silicone Compound | Structural formula | Mn | Mw | Mw/Mn |
|---|---|---|---|---|
| X | Formula (3-1) | 1690 | 1940 | 1.15 |
| Y | Formula (3-2) | 1210 | 1540 | 1.27 |
| Z | Formula (3-2) | 3140 | 3550 | 1.13 |

### <Compounds used in Comparative Examples>

FM-0711: One-terminal methacryl-modified organosilicon compound (trade name: Silaplane FM-0711, manufactured by JNC Corporation, number average molecular weight: 1000)
FM-0721: One-terminal methacryl-modified organosilicon compound (trade name: Silaplane FM-0721, manufactured by JNC Corporation, number average molecular weight: 5000)

### <Polymerizable Monomer>

BMA: butyl methacrylate
GMA: glycidyl methacrylate
A-HD-N: 1,6-hexanediol diacrylate (trade name: NK Ester A-HD-N, manufactured by Shin-Nakamura Chemical Co., Ltd.)
TMPTA: trimethylolpropane triacrylate
M-305: pentaerythritol tri- and tetraacrylate (trade name: Aronix M-305, manufactured by Toagosei Co., Ltd.)
A-DPH: dipentaerythritol polyacrylate (trade name: NK Ester A-DPH, manufactured by Shin-Nakamura Chemical Co., Ltd.)

### <Polymerization Initiator>

Polymerization initiator A: 2-dimethylamino-2-(4-methylbenzyl)-1-(4-morpholinophenyl)-1-butanone
Polymerization initiator B: dimethyl 2,2'-azobis(2-methylpropionate)

### <Solvent>

PGMEA: propylene glycol monomethyl ether acetate

### <Preparation of Photocurable Resin Composition>

The photocurable resin composition used in this Example was prepared according to the following procedure.

### [Preparation Example 1] Preparation of photocurable resin composition A1

Silicone compound X (0.0364 g, 1 part by weight), TMPTA (3.6 g, 99 parts by weight), polymerization initiator A (0.3636 g, 10 parts by weight), and PGMEA (1.0 g) were mixed to prepare a photocurable resin composition having a concentration of 80% by weight.

### [Preparation Examples 2 to 9] Preparation of photocurable resin compositions A2 to A6, C1 to C6

Photocurable resin compositions A2 to A6, C1 to C6 were prepared in the same manner as Preparation Example 1, except that the compound represented by formula (1), polymerizable monomer, polymerization initiator, solvent, and concentration were changed as shown in Table 2.

### <Evaluation of Appearance of Photocurable Resin Composition>

The appearance of the prepared photocurable resin composition was visually confirmed. In the case of good compatibility between the silicone compound and the polymerizable monomer, a transparent uniform solution may be obtained. On the other hand, in the case of poor compatibility, the photocurable resin composition becomes cloudy or undergoes phase separation. The results are shown in Table 2. In Table 2, the numerical values in square brackets represent weight ratios.

**[Table 2]**

| Preparation Example | Photocurable resin composition No. | Formula (1) compound | Polymerizable monomer | | | Polymerization initiator | Solvent | Concentration | Appearance of photocurable resin composition |
|---|---|---|---|---|---|---|---|---|---|
| 1 | A1 | X [1] | | TMPTA [99] | | Polymerization initiator A [10] | PGMEA | 80 % by weight | transparent uniform |
| 2 | A2 | Y [1] | | TMPTA [99] | | Polymerization initiator A [10] | PGMEA | 80 % by weight | transparent uniform |
| 3 | A3 | X [2] | | A-DPH [78] | A-HD-N [20] | Polymerization initiator A [10] | PGMEA | 65% by weight | transparent uniform |
| 4 | A4 | Y [2] | | A-DPH [78] | A-HD-N [20] | Polymerization initiator A [10] | PGMEA | 65% by weight | transparent uniform |
| 5 | A5 | X [1] | | M-305 [99] | | Polymerization initiator A [10] | PGMEA | 65% by weight | transparent uniform |
| 6 | A6 | Y [1] | | M-305 [99] | | Polymerization initiator A [10] | PGMEA | 65% by weight | transparent uniform |
| 7 | C1 | | FM-0711 [2] | A-DPH [78] | A-HD-N [20] | Polymerization initiator A [10] | PGMEA | 65% by weight | turbid separated |
| 8 | C2 | | FM-0711 [1] | M-305 [99] | | Polymerization initiator A [10] | PGMEA | 65% by weight | turbid separated |
| 9 | C3 | | FM-0721 [1] | TMPTA [99] | | Polymerization initiator A [10] | PGMEA | 80% by weight | turbid separated |
| 10 | C4 | | FM-7711 [1] | TMPTA [99] | | Polymerization initiator A [10] | PGMEA | 80% by weight | turbid separated |
| 11 | C5 | | FM-0711 [1] | TMPTA [99] | | Polymerization initiator A [10] | PGMEA | 80% by weight | transparent uniform |
| 12 | C6 | | | TMPTA [100] | | Polymerization initiator A [10] | PGMEA | 80% by weight | transparent uniform |

The photocurable resin compositions A1 to A6 of the present invention using the compound represented by formula (1) are transparent and uniform solutions, and it may be said that they have excellent compatibility with the polymerizable monomer.

### <Evaluation of Coatability>

The prepared photocurable resin composition was spin-coated on a glass substrate at 1000 rpm for 10 seconds, and then prebaked on a hot plate at 100°C for 2 minutes. Furthermore, using a conveyor type UV irradiation device equipped with a high pressure mercury lamp (H08-L41, rated 160W/cm²) manufactured by Iwasaki Electric Co., Ltd., ultraviolet irradiation was performed at an illuminance of 200mW/cm² and an exposure dose of 1000mJ/cm² to obtain a glass substrate with cured film having a film thickness of 5µm. The exposure dose was measured with an illuminometer (UVPF-A1/PD-365) manufactured by Iwasaki Electric Co., Ltd.

The appearance of the glass substrate with cured film was visually confirmed. In the case of formation of a uniform and transparent cured film, the coatability was good and evaluated as O. On the other hand, in the case of liquid or gel-like components remaining on the cured film surface, that is, in the case of presence of uncured components, or in the case of cloudiness or unevenness occurring in the cured film, it was unsuitable and evaluated as ×.

### <Measurement of Contact Angle>

The prepared photocurable resin composition was spin-coated on a glass substrate at 1000 rpm for 10 seconds, and then prebaked on a hot plate at 100°C for 2 minutes. Furthermore, using a conveyor type UV irradiation device equipped with a high pressure mercury lamp (H08-L41, rated 160W/cm²) manufactured by Iwasaki Electric Co., Ltd., after ultraviolet irradiation at an illuminance of 200mW/cm² and an exposure dose of 1000mJ/cm², heating was performed in an oven at 230°C for 30 minutes to obtain a glass substrate with cured film having a film thickness of 5µm. The exposure dose was measured with an illuminometer (UVPF-A1/PD-365) manufactured by Iwasaki Electric Co., Ltd.

2µL of water and diiodomethane were dropped on the glass substrate with cured film, and measured using a contact angle measuring device (trade name; Drop Master DM500, manufactured by Kyowa Interface Science Co., Ltd.). It may be said that the contact angle of water is good in the case of being greater than 95°. Moreover, it may be said that the contact angle of diiodomethane (CH₂I₂) is good in the case of being greater than 50°.

### <Evaluation of Antifouling Property>

The prepared photocurable resin composition was spin-coated on a glass substrate at 1000 rpm for 10 seconds, and then prebaked on a hot plate at 100°C for 2 minutes. Furthermore, using a conveyor type UV irradiation device equipped with a high pressure mercury lamp (H08-L41, rated 160W/cm²) manufactured by Iwasaki Electric Co., Ltd., after ultraviolet irradiation at an illuminance of 200mW/cm² and an exposure dose of 1000mJ/cm², heating was performed in an oven at 230°C for 30 minutes to obtain a glass substrate with cured film having a film thickness of 5µm. The exposure dose was measured with an illuminometer (UVPF-A1/PD-365) manufactured by Iwasaki Electric Co., Ltd.

After drawing a line with Hi-Mackee (registered trademark) (black) manufactured by Zebra Co., Ltd. on the glass substrate with cured film, it was wiped off with Kimwipes (registered trademark) manufactured by Nippon Paper Crecia Co., Ltd. In the case of no line traces remaining, the antifouling property was good and evaluated as O. In the case of confirming line traces, it was evaluated as ×.

### <Measurement of Pencil Hardness>

The prepared photocurable resin composition was spin-coated on a glass substrate at 1000 rpm for 10 seconds, and then prebaked on a hot plate at 100°C for 2 minutes. Furthermore, using a conveyor type UV irradiation device equipped with a high pressure mercury lamp (H08-L41, rated 160W/cm²) manufactured by Iwasaki Electric Co., Ltd., after ultraviolet irradiation at an illuminance of 200mW/cm² and an exposure dose of 1000mJ/cm², heating was performed in an oven at 230°C for 30 minutes to obtain a glass substrate with cured film having a film thickness of 5µm. The exposure dose was measured with an illuminometer (UVPF-A1/PD-365) manufactured by Iwasaki Electric Co., Ltd.

The pencil hardness of the cured film was measured by performing scratch hardness (pencil method) of JIS K-5600-5-4 on the glass substrate with cured film. In the case of pencil hardness being 3H or more, it was evaluated as O, and it may be said that the scratch resistance is good. The case of 2H or less was evaluated as ×.

### [Example 1]

In the case of visually confirming the coatability of photocurable resin composition A1, since it was a uniform and transparent cured film, it was evaluated as O. In the case of measuring the contact angle of water, it was 96°. Similarly, in the case of measuring the contact angle of diiodomethane, it was 56°. In the case of evaluating the antifouling property, since no line traces remained, it was evaluated as O. In the case of measuring the pencil hardness, since it was 3H, it was evaluated as O.

### [Examples 2 to 6, Comparative Examples 1 to 6]

Evaluation of coatability and measurement of contact angle were performed in the same manner as Example 1, except that the photocurable resin composition was changed as shown in Table 3. The results are shown in Table 3 together with the results of Example 1. Moreover, evaluation of antifouling property and measurement of pencil hardness were performed in the same manner as Example 1, except that the photocurable resin composition was changed as shown in Table 4. The results are shown in Table 4 together with the results of Example 1. Note that Examples 3 to 4 and Comparative Example 1 did not perform prebaking in the preparation of the glass substrate with cured film.

**[Table 3]**

| Example | Composition No. | Coatability | Contact angle (water) | Contact angle (CH₂I₂) |
|---|---|---|---|---|
| 1 | A1 | ○ | 96 | 56 |
| 2 | A2 | ○ | 96 | 57 |
| 3 | A3 | ○ | 102 | 63 |
| 4 | A4 | ○ | 101 | 60 |
| 5 | A5 | ○ | 98 | 62 |
| 6 | A6 | ○ | 98 | 64 |
| Comparative Example 1 | C1 | × | 90 | 45 |
| Comparative Example 2 | C2 | × | 79 | 40 |
| Comparative Example 3 | C3 | × | 86 | 35 |
| Comparative Example 4 | C4 | ○ | 91 | 38 |
| Comparative Example 5 | C5 | × | 85 | 36 |
| Comparative Example 6 | C6 | ○ | 69 | 35 |

**[Table 4]**

| Example | Composition No. | Antifouling property | Pencil hardness |
|---|---|---|---|
| 1 | A1 | ○ | ○ |
| 2 | A2 | ○ | ○ |
| 5 | A5 | ○ | ○ |
| 6 | A6 | ○ | ○ |
| Comparative Example 4 | C4 | × | × |
| Comparative Example 5 | C5 | × | × |
| Comparative Example 6 | C6 | × | × |

The copolymers of the present invention in photocurable resin compositions A1 to A6 using the compound represented by formula (1) had good coatability. Moreover, the contact angles of water and diiodomethane showed good values, and it may be said that they excel in water repellency and oil repellency. Moreover, the antifouling property and pencil hardness were good. On the other hand, the copolymers of photocurable resin compositions C1 to C3 and C5 not using the compound represented by formula (1) had poor coating, the contact angles of water and diiodomethane were low values, and the antifouling property and pencil hardness of the copolymer in photocurable resin composition C5 were not good. The copolymers of photocurable resin compositions C4 and C6 had good coatability, but the contact angles of water and diiodomethane were low values, and the antifouling property and pencil hardness were not good.

### [Example 7] Preparation of Composition

Silicone compound X (0.96 g, 3 parts by weight), BMA (24.64 g, 77 parts by weight), GMA (6.4 g, 20 parts by weight), polymerization initiator B (1.60 g, 5 parts by weight), and PGMEA (19.2 g) were mixed to prepare composition B1 having a concentration of 63% by weight.

### [Examples 8 to 9, Comparative Example 7] Preparation of Compositions B2 to B3, D1

Compositions B2 to B3 and D1 were prepared in the same manner as Example 7, except that the compound represented by formula (1), polymerizable monomer, polymerization initiator, solvent, and concentration were changed as shown in Table 5. In Table 5, the numerical values in square brackets represent weight ratios.

**[Table 5]**

| Example | Composition No. | Formula (1) compound | Polymerizable monomer | | Polymerization initiator | Solvent | Concentration |
|---|---|---|---|---|---|---|---|
| 7 | B1 | X [3] | BMA [77] | GMA [20] | Polymerization initiator B [5] | PGMEA | 63% by weight |
| 8 | B2 | Y [3] | BMA [77] | GMA [20] | Polymerization initiator B [5] | PGMEA | 63% by weight |
| 9 | B3 | Z [3] | BMA [77] | GMA [20] | Polymerization initiator B [5] | PGMEA | 63% by weight |
| Comparative Example 7 | D1 | | BMA [80] | GMA [20] | Polymerization initiator B [5] | PGMEA | 63% by weight |

### <Evaluation of Appearance of Copolymer Solution>

PGMEA (28.8 g) was placed in a 100 mL three-necked flask equipped with a stirring blade and nitrogen inlet tube, and the atmosphere was replaced with nitrogen and heated to 100°C. The prepared composition was added dropwise to this solvent, followed by stirring at 100°C for 1 hour for polymerization to prepare a copolymer solution having a concentration of 40% by weight. The appearance of the copolymer solution was visually confirmed. In the case of uniform copolymerization reaction and good compatibility between the obtained copolymer and solvent, a transparent uniform solution may be obtained. On the other hand, in the case of non-uniform progress of the copolymerization reaction and the obtained copolymer containing components with poor compatibility with the solvent, the copolymer solution becomes cloudy or phase separation occurs.

### <Measurement of Contact Angle>

The prepared copolymer solution was spin-coated on a glass substrate at 600 rpm for 10 seconds, then prebaked on a hot plate at 100°C for 2 minutes. Furthermore, by heating in an oven at 200°C for 30 minutes, a glass substrate with cured film having a film thickness of 5 µm was obtained. The exposure dose was measured with an illuminometer (UVPF-A1/PD-365) manufactured by Iwasaki Electric Co., Ltd.

2 µL of water and diiodomethane were dropped on the glass substrate with cured film, and measured using a contact angle measuring device (trade name; Drop Master DM500, manufactured by Kyowa Interface Science Co., Ltd.). The contact angle of water may be considered good if it is greater than 95°. Moreover, the contact angle of diiodomethane (CH₂I₂) may be considered good if it is greater than 50°.

### [Example 10]

The appearance of the copolymer solution of composition B1 was transparent and uniform. Moreover, the contact angle of water on the glass substrate with cured film prepared from the copolymer solution of composition B1 was measured to be 97°. Similarly, the contact angle of diiodomethane was measured to be 56°.

### [Examples 11-12, Comparative Example 8]

Preparation of copolymer solution and measurement of contact angle were performed in the same manner as Example 10, except that the composition was changed as shown in Table 6. The results are shown in Table 6 together with the results of Example 10.

**[Table 6]**

| Example | Composition No. | Appearance of the copolymer | Contact angle | Contact angle ( CH₂I₂ ) |
|---|---|---|---|---|
| 10 | B1 | transparent uniform | 97 | 56 |
| 11 | B2 | transparent uniform | 96 | 55 |
| 12 | B3 | transparent uniform | 99 | 55 |
| Comparative Example 8 | D1 | transparent uniform | 87 | 43 |

The copolymer solution s of compositions B1 to B3 using the compound represented by formula (1) were transparent and uniform. Moreover, the contact angles of water and diiodomethane of the cured films thereof were good, and it may be said that they have excellent water repellency and oil repellency. On the other hand, the contact angle of copolymer solution D1 not using a silicone compound did not show good values.

### INDUSTRIAL APPLICABILITY

The silicone compound that is a raw material of the silicone-containing copolymer of the present invention is compatible well with polymerizable monomers. The silicone-containing copolymer of the present invention has good water repellency, oil repellency, antifouling properties, and scratch resistance, and can be suitably applied to articles such as resist materials, paints, coating materials, ophthalmic devices, and 3D printers.

## Claims

1. A silicone-containing copolymer, obtained by polymerization of a composition comprising a compound represented by formula (1) and a polymerizable monomer, 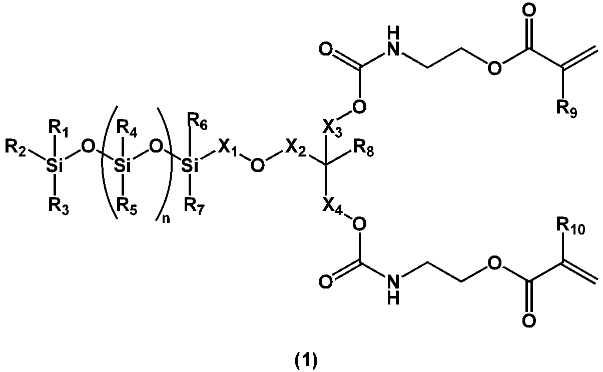 wherein in the formula (1), n is an integer of 0 to 300, R₁, R₂, R₃, R₄, R₅, R₆, R₇, and R₈ are each independently hydrogen or alkyl having 1 to 30 carbon atoms, R₉ and R₁₀ are each independently hydrogen or methyl, and X₁, X₂, X₃, and X₄ are each independently alkylene having 1 to 20 carbon atoms.

2. The silicone-containing copolymer according to claim 1, wherein the compound represented by the formula (1) is a compound represented by formula (2), 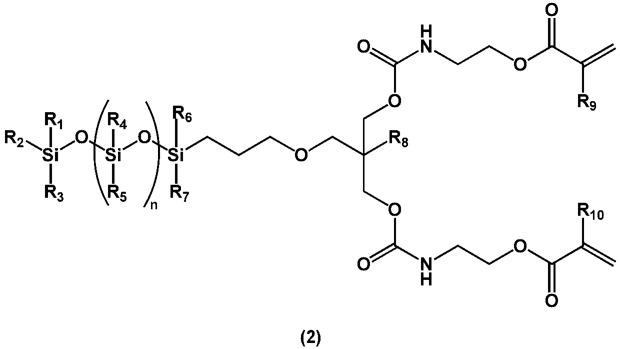 wherein in the formula (2), n is an integer of 0 to 300, R₁, R₂, R₃, R₄, R₅, R₆, R₇, and R₈ are each independently hydrogen or alkyl having 1 to 30 carbon atoms, and R₉ and R₁₀ are each independently hydrogen or methyl.

3. The silicone-containing copolymer according to claim 1, wherein the compound represented by the formula (1) is a compound represented by formula (3), 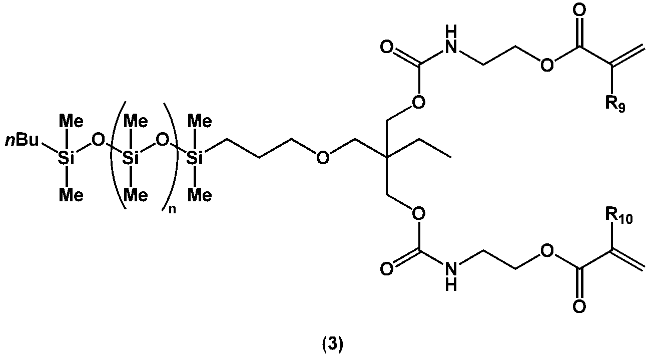 wherein in the formula (3), n is an integer of 0 to 300, and R₉ and R₁₀ are each independently hydrogen or methyl.

4. The silicone-containing copolymer according to claim 1, wherein the polymerizable monomer comprises a polymerizable monomer having two or more (meth)acryloyl groups.

5. The silicone-containing copolymer according to claim 1, wherein the polymerizable monomer comprises a polymerizable monomer having three or more (meth)acryloyl groups.

6. The silicone-containing copolymer according to claim 4, wherein in a composition comprising the compound represented by the formula (1) according to claim 1 and a polymerizable monomer having two or more (meth)acryloyl groups, a content of the compound represented by formula (1) is 0.5% to 4.0% by weight relative to a total amount of the compound represented by the formula (1) and the polymerizable monomer.

7. The silicone-containing copolymer according to claim 1, wherein the polymerizable monomer comprises a polymerizable monomer having two or more acryloyl groups.

8. The silicone-containing copolymer according to claim 1, wherein the polymerizable monomer comprises a polymerizable monomer having three or more acryloyl groups.

9. The silicone-containing copolymer according to claim 7, wherein in a composition comprising the compound represented by the formula (1) according to claim 1 and a polymerizable monomer having two or more acryloyl groups, a content of the compound represented by the formula (1) is 0.5% to 4.0% by weight relative to a total amount of the compound represented by the formula (1) and the polymerizable monomer.

10. The silicone-containing copolymer according to claim 1, wherein the polymerizable monomer comprises a polymerizable monomer having one (meth)acryloyl group.

11. The silicone-containing copolymer according to claim 10, wherein in a composition comprising the compound represented by the formula (1) according to claim 1 and a polymerizable monomer having one (meth)acryloyl group, a content of the compound represented by the formula (1) is 0.5% to 9.0% by weight relative to a total amount of the compound represented by the formula (1) and the polymerizable monomer.

12. The silicone-containing copolymer according to claim 10, wherein in a composition comprising the compound represented by the formula (1) according to claim 1 and a polymerizable monomer having one methacryloyl group, a content of the compound represented by the formula (1) is 0.5% to 9.0% by weight relative to a total amount of the compound represented by the formula (1) and the polymerizable monomer.

13. The silicone-containing copolymer according to claim 1, wherein the silicone-containing copolymer is obtained by ultraviolet irradiation.

14. The silicone-containing copolymer according to claim 1, wherein the silicone-containing copolymer is obtained by thermal polymerization.

15. A cured product, comprising the silicone-containing copolymer according to any one of claims 1 to 14 and obtained by reacting the copolymer with a crosslinking agent.

16. A method for producing the silicone-containing copolymer according to any one of claims 1 to 14.

17. A photocurable resin composition, comprising a compound represented by formula (1) and a polymerizable monomer having two or more acryloyl groups, wherein a content of the compound represented by the formula (1) is 0.5% to 4.0% by weight relative to a total amount of the compound represented by the formula (1) and the polymerizable monomer, and 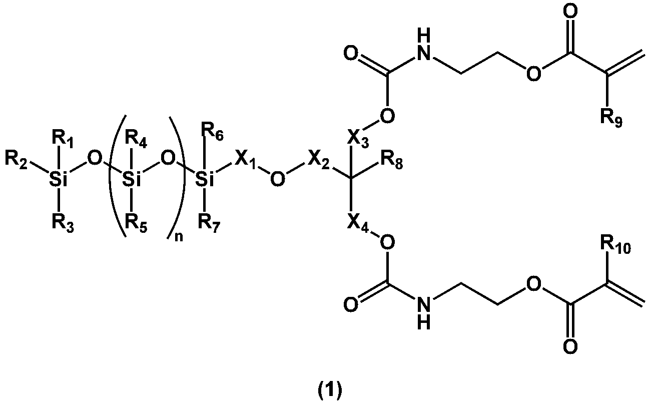 wherein in the formula (1), n is an integer of 0 to 300, R₁, R₂, R₃, R₄, R₅, R₆, R₇, and R₈ are each independently hydrogen or alkyl having 1 to 30 carbon atoms, R₉ and R₁₀ are each independently hydrogen or methyl, and X₁, X₂, X₃, and X₄ are each independently alkylene having 1 to 20 carbon atoms.

18. A thermosetting resin composition, comprising a compound represented by formula (1) and a polymerizable monomer having one methacryloyl group, wherein a content of the compound represented by the formula (1) is 0.5% to 9.0% by weight relative to a total amount of the compound represented by the formula (1) and the polymerizable monomer, and 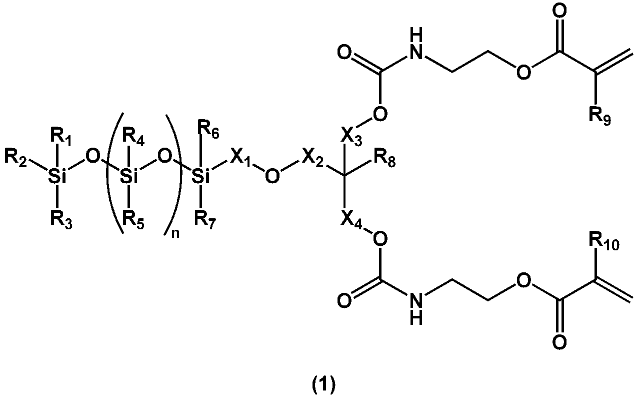 wherein in the formula (1), n is an integer of 0 to 300, R₁, R₂, R₃, R₄, R₅, R₆, R₇, and R₈ are each independently hydrogen or alkyl having 1 to 30 carbon atoms, R₉ and R₁₀ are each independently hydrogen or methyl, and X₁, X₂, X₃, and X₄ are each independently alkylene having 1 to 20 carbon atoms.
